# EUROPÄISCHE PATENTANMELDUNG

(11) **EP 0 810 502 A1**
(43) Veröffentlichungstag der Anmeldung: **03.12.1997**
(21) Anmeldenummer: 97108257.3
(22) Anmeldetag: 22.05.1997
(51) Int. Cl.: G05D 23/19

(54) **Steuereinheit für eine Heizungsanlage**

(30) Priorität: 30.05.1996 DE 19621664
(71) Anmelder: DIEHL GMBH & CO., 90478 Nürnberg (DE)
(72) Erfinder: Bauernfeind, Dieter, 90559 Burgthann (DE); Wirges, Thomas, 51570 Herchen (DE); Teubner, Birgit, 91154 Roth (DE)

(57) **Zusammenfassung**

Die Erfindung betrifft eine Steuereinheit für eine Heizungsanlage (10), welcher eine elektronische Steuerschaltung (5) und einen Speicher (6) zur Speicherung der Parameter der Heizungssteuerung aufweist. Es sind ein Mikrophon (2) und ein Spracherkennungsmodul (13) vorgesehen, über welche die Befehle zur Ansteuerung der Heizungsanlage (10) durch gesprochene Worte eingegeben werden können.

## Beschreibung

Die Erfindung betrifft eine Steuereinheit für eine Heizungsanlage gemäß dem Oberbegriff des Anspruches 1.

Steuereinhieiten dieser Art, insbesondere in Form von Raumthermostaten, welche eine elektronische Steuerschaltung, Speicherelemente für die Abspeicherung der Heizungsparameter und eine Verbindung zur Heizungsanlage haben, sind handelsüblich und werden beispielsweise auch von der Anmelderin vertrieben. Derartige Steuereinheiten ermöglichen es dem Benutzer, von einem Raum der Wohnung aus die Heizungsanlage mit verschiedenen Befehlen anzusteuern. Zu diesem Zweck sind an einer solchen Steuereinheit verschiedene Bedienungselemente vorgesehen.

Es sind auch sogenannte Fernbedienungen für Heizungsanlagen handelsüblich, welche ortsungebunden Befehle an eine Heizungsanlage zu deren Steuerung ausgeben können. Solche Fernbedienungen können mit oder ohne einen Raumthermostaten ausgerüstet sein.

Ausgehend von diesem Stand der Technik ist es Aufgabe der Erfindung, eine bequemere Betätigbarkeit einer solchen Steuereinheit vorzuschlagen.

Zur Lösung dieser Aufgabe werden die im Anspruch aufgeführten Merkmale vorgeschlagen.

Durch ein Mikrophon und einen Spracherkennungsmodul ist es möglich, gesprochene Befehle, die das System erkennt, der Steuereinheit zuzuführen und dort einem vorgegebenen Funktionsbefehl für die Heizungsanlage zuzuordnen und der letzteren zu übermitteln. Dies bedeutet, daß der Benutzer zur Eingabe eines Befehls nicht mehr zur Steuereinheit zu deren Bedienung gehen muß, sondern dieser den Befehl zurufen kann.

Spracherkennungssysteme sind grundsätzlich bereits bekannt und im Handel erhältlich. Diese werden jedoch nicht in spezifischer Weise Heizungsanlagen zugeordnet.

Die Steuereinheit muß vom Benutzer einmalig durch Eingabe und Speicherung der gesprochenen Befehle programmiert werden. Zu diesem Zwecke sind gemäß einer Weiterbildung der Erfindung mehrere Bedienungsschalter vorgesehen, mit welchen verschiedene Funktionsbefehle der Steuereinheit auswählbar sind.

Zuin Zwecke der Eingabe solcher Befehle in die Steuereinheit ist gemäß weiterer Ausbildung der Erfindung ein weiterer Schalter (teach-in) vorgesehen, bei dessen Betätigung ein gesprochener Befehl vom Spracherkennungsmodul aufgenommen und als Referenzangabe abgespeichert wird. Zu diesem Zwecke enthält der Spracherkennungsmodul auch einen entsprechenden Speicher.

Die Steuereinheit kann als Raumthermostat oder auch als Fernbedienungseinheit mit oder ohne Raumthermostat ausgebildet sein. Eine solche Fernbedienungseinheit kann drahtgebunden oder drahtlos mit der Heizungsanlage in Verbindung stehen.

Gemäß weiterer Ausbildung der Erfindung ist vorgesehen, daß der als Referenzangabe abgespeicherte Befehl dem über einen der Bedienungsschalter ausgewählten, entsprechenden Funktionsbefehl zugeordnet wird.

In einer anderen Weiterbildung der Erfindung ist vorgesehen, daß eine digitale Anzeige (numerisch oder alphanumerisch) vorgesehen und an die elektronische Steuerschaltung angeschlossen ist, auf welcher u. a. die ausgewählten Funktionsbefehle angezeigt werden können. Diese Funktionsbefehle können zusammen mit oder anstelle von weiteren Angaben, wie Zeit, Temperatur und dergleichen auf der Anzeige dargestellt werden.

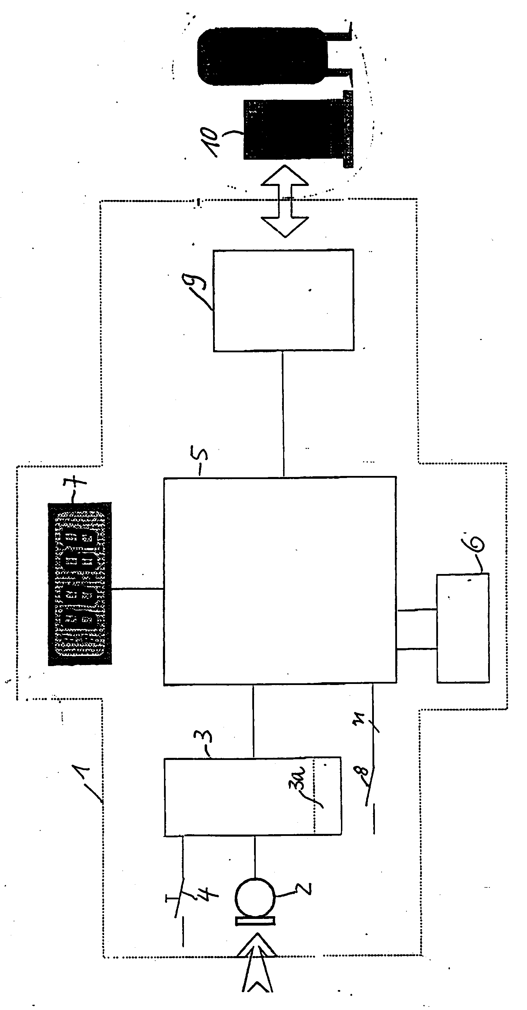

Die Erfindung soll nachfolgend anhand der Zeichnung an einem Ausführungsbeispiel noch näher erläutert werden.

In einem Raumthermostaten 1 ist ein Mikrophon 2 angeordnet, dein ein Spracherkennungsmodul 3 nachgeordnet ist. An letzteren ist ein Schalter 4, ein 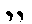 teach-in"-Schalter, der von außen betätigbar ist, angeschlossen. Der Spracherkennungsmodul 3 enthält einen Speicher 3a, in welchem nach Betätigung des Schalters 4 gesprochene Befehle eingespeichert werden.

Dem Spracherkennungsmodul nachgeordnet ist eine elektronische Steuerschaltung 5 in Form eines Mikroprozessors, dem ein Speicher 6 zugeordnet ist. In diesem Speicher 6, der vorzugsweise als nichtflüchtiger Speicher, insbesonderer als EEPROM ausgebildet ist, werden die für die Ansteuerung der Heizungsanlage benötigten Funktionsbefehle abgespeichert. Der elektronischen Steuerschaltung 5 ist ferner zugeordnet eine digitale Anzeige 7, hier in Form einer vierstelligen Siebensegmentanzeige dargestellt. Auf dieser Anzeige können anstelle der Uhrzeit oder der Raumtemperatur andere Angaben, nämlich den Funktionsbefehlen zugeordnete Angaben angezeigt werden. Diese Anzeige kann auch mit mehr Stellen versehen werden, insbesondere in Form alphanumerischer Angaben, um die Funktionsbefehle anschaulicher darstellen zu können.

Zur Auswahl der verschiedenen Funktionsbefehle sind an die elektronische Steuerschaltung 5 mehrere Bedienungsschalter 8 angeschlossen. Zur Darstellung der Mehrzahl dieser Schalter und Anschlußleitungen ist die Ziffer n an der einen Anschlußleitung verwendet.

Der elektronischen Steuerschaltung 5 nachgeordnet ist ein Interface-Modul 9, welcher die aktive Schnittstelle für die Heizungsanlage 10 bildet. Die Verbindung zwischen dieser Schnittstelle und der Heizungsanlage kann drahtlos, vorzugsweise per Funk, oder auch drahtgebunden, beispielsweise in Form einer Zweidrahtleitung, ausgeführt sein.

Die Funktionsweise der erfindungsgemäßen Anordnung ist wie folgt. In dem Speicher 6 sind die von dem Raumthermostaten an die Heizungsanlage zu übermittelnden Funktionsbefehle abgespeichert. Diese können einen Temperaturwert oder die Angabe 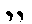 wärmer" oder 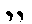 kälter" oder 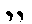 Nachtabsenkung" oder 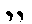 Sommerzeit" enthalten. Diese Aufzählung ist nur ein Ausschnitt aus einer Vielzahl möglicher Befehle und ist naturgemäß den Steuermöglichkeiten für die Heizungsanlage angepaßt.

Der Benutzer muß nun einmalig seine Sprache den jeweiligen Funktionsbefehlen zuordnen. Zu diesem Zwecke wird der Schalter 4 nach Betätigung eines der Bedienungsschalter 8 zur Auswahl des vorgesehenen Funktionsbefehls betätigt und der entsprechende Befehl, z. B. 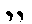 wärmer" gesprochen. Der Spracherkennungsmodul 3 wandelt die Sprache in digitale Signale um, die in dem Speicher 3a gespeichert werden. Dabei erfolgt gleichzeitig eine elektronische Zuordnung zu dem entprechenden Funktionsbefehl im Speicher 6.

Der Benutzer gibt nacheinander alle gewünschten Befehle, jeweils nach vorheriger Auswahl des betreffenden Funktionsbefehls durch Betätigung eines Schalters 8 in den Speicher 3a ein. Zweckmäßigerweise sind die Speicherplätze im Speicher 3a so organisiert, daß mehrere Benutzer die entsprechenden Befehle eingeben und, zugeordnet den jeweiligen Funktionsbefehlen, nebeneinander speichern können. Somit ist die Benutzung des Raumthermostaten durch mehrere Personen möglich.

Nach der vorbeschriebenen Eingabe der Befehle ist der Raumthermostat funktionsfähig. Er faßt laufend die im Raum gesprochenen Worte auf Um sich jedoch 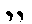 angesprochen" zu fühlen, muß er mit einem Kennwort vor einem Befehl initialisiert werden. Dieses Kennwort kann beispielsweise 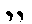 Heizung" sein. Der Benutzer ruft beispielsweise 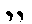 Heizung, wärmer, 3 Grad". Der Raumthermostat erkennt, daß er angesprochen ist, erkennt den Befehl 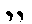 wärmer" und den Befehl 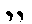 3 Grad" und leitet diese Befehle an die elektronische Steuerschaltung 5. Diese sucht aus dem Speicher 6 den entsprechenden Funktionsbefehl heraus und gibt ihn über das Interface-Modul 9 an die Heizung weiter. Gleichzeitig wird der entsprechende Funktionsbefehl an der Anzeige 7 dargestellt.

In analoger Weise können die verschiedensten Befehle, die im Raumthermostat gespeichert sind, der Heizungsanlage übermittelt werden.

## Patentansprüche

1. Steuereinheit für eine Heizungsanlage, bei welcher eine elektronische Steuerschaltung, ein Speicher für die Speicherung der Parameter zur Heizungsteuerung sowie ein Interface-Modul zur Weiterleitung der Daten an die Heizungsanlage vorgesehen sind,
dadurch gekennzeichnet,
daß ein Mikrophon (2) sowie ein Spracherkennungsmodul (3) zur Aufnahme und Verarbeitung der der Steuereinheit (1) zugesprochenen Befehle vorhanden sind.

2. Steuereinheit nach Anspruch 1,
dadurch gekennzeichnet,
daß diese als Fernbedienungseinheit ausgebildet ist.

3. Steuereinheit nach Anspruch 1,
dadurch gekennzeichnet,
daß diese als Raumthermostat ausgebildet ist.

4. Steuereinheit nach Anspruch 1,
dadurch gekennzeichnet,
daß mehrere Bedienungsschalter (8) vorgesehen sind, mit welchen verschiedene Funktionsbefehle der Steuereinheit (1) auswählbar sind.

5. Steuereinheit nach Anspruch 1,
dadurch gekennzeichnet,
daß ein weiterer Schalter (4) (teach-in) vorgesehen ist, bei dessen Betätigung ein gesprochener Befehl vom Spracherkennungsmodul (3) aufgenommen und als Referenzangabe abgespeichert wird.

6. Steuereinheit nach Anspruch 5,
dadurch gekennzeichnet,
daß der als Referenzangabe abgespeicherte Befehl dem über einen der Bedienungsschalter (8) ausgewählten entsprechenden Funktionsbefehl zugeordnet wird.

7. Steuereinheit nach Anspruch 1,
dadurch gekennzeichnet,
daß das Interface-Modul (9) drahtlos oder drahtgebunden mit der Heizungsanlage (10) in Verbindung steht.

8. Steuereinheit nach Anspruch 1,
dadurch gekennzeichnet,
daß der der elektronischen Steuerschaltung (5) zugeordnete Speicher (6) ein nichtflüchtiger Speicher, insbesondere ein EEPROM ist.

9. Steuereinheit nach Anspruch 1,
dadurch gekennzeichnet,
daß eine digitale Anzeige (7) numerisch oder alphanumerisch, vorgesehen und an die elektronische Steuerschaltung () angeschlossen ist, auf welcher u. a. die ausgewählten Funktionsbefehle angezeigt werden können.
